# EUROPÄISCHE PATENTANMELDUNG

(11) **EP 2 248 650 A2**
(43) Veröffentlichungstag der Anmeldung: **10.11.2010**
(21) Anmeldenummer: 10160667.1
(22) Anmeldetag: 22.04.2010
(51) Int. Cl.: B29C 45/16, B29C 45/14, B29C 49/00, B29C 49/06, B29C 49/22

(54) **Verfahren zur Herstellung von Schichtverbund-Behältern**

(30) Priorität: 08.05.2009 DE 102009020518
(71) Anmelder: tesa SE, 20253 Hamburg (DE)
(72) Erfinder: Grünauer, Judith, 22761, Hamburg (DE); Keite-Telgenbüscher, Dr. Klaus, 22529, Hamburg (DE)

(57) **Zusammenfassung**

Die Erfindung betrifft ein Verfahren zur Herstellung eines zumindest zweischichtigen anorganisch/polymeren Verbundmaterials, wobei ein überwiegend anorganisches Material bereitgestellt wird und ein polymeres Material bereitgestellt wird, wobei das überwiegend anorganische Material eine Glasübergangstemperatur von nicht mehr als 500 °C aufweist, das überwiegend anorganische Material und das polymere Material in einen viskosen Zustand gebracht werden und das überwiegend anorganische Material und das polymere Material durch Spritzgießen zum Verbundmaterial ausgeformt werden, sowie ein mittels dieses Verfahrens erhältliches Verbundmaterial.

## Beschreibung

Die Erfindung betrifft ein Verfahren zur Herstellung eines zumindest zweischichtigen anorganisch/polymeren Verbundmaterials umfassend zumindest ein überwiegend anorganisches Material und zumindest ein polymeres Material, derartige Verbundmaterialien sowie Formkörper hieraus.

Kunststoffbehälter haben in den letzten 20 Jahren vermehrt Metall- oder Glasbehälter (z.B. Kanister, Flaschen, Flacons, Ampullen) verdrängt. Dafür werden bevorzugt Polymere wie Polyolefine, Polyamide, Polyester (PET) oder Polyvinylchlorid (PVC) eingesetzt.

Ein wesentliches Problem der Kunststoffe ist jedoch die im Vergleich zu Glas geringe Permeationssperre. Dies betrifft insbesondere (ist aber nicht eingeschränkt auf) Kohlendioxid, Wasserdampf, Sauerstoff und Aromen.

Eine technische Lösung dieser Problematik ist die Ausbildung von Mehrschichtbehältern, bei denen verschiedene Kunststoffe miteinander kombiniert werden, die jeweils spezifisch vorteilhafte Permeationsbarrieren aufweisen.

Als Herstellverfahren für solche Kunststoffbehälter hat sich einerseits die Mehrschicht-Blasformtechnik (Mehrschicht Extrusionsblasformen) durchgesetzt, bei der verschiedene Kunststoffe zunächst miteinander koextrudiert und dann zu einem Hohlkörper ausgeformt werden. Mit diesem Verfahren können mehrschichtige Hohlkörper hergestellt werden. Besonders bekannt geworden ist die Herstellung einer Ketchup-Flasche, die vorwiegend aus Polypropylen besteht. Sie ist flach, auspressbar und im Gegensatz zum traditionellen Packmittelmaterial Glas leicht und unzerbrechlich. Gegenüber der gleichen einschichtig aus Polypropylen hergestellten Flaschen hat die koextrudierte Flasche eine um bis zu zwölf Monate gesteigerte Lagerfähigkeit für Ketchup.

Die bekannte Ketchup-Flasche besteht aus folgenden Schichten: Polypropylen 370 µm, Haftvermittler 20 µm, Ethylen-Vinyl-Alkohol-Copolymer 20 µm, Haftvermittler 20 µm, Polypropylen 370 µm.

Die Schicht aus Ethylen-Vinyl-Alkohol-Copolymer wirkt als Gasbarriere für Sauerstoff und verhindert daher eine Oxidierung und die damit einhergehende Verfärbung des Inhalts. Wie das obige Beispiel zeigt, wird außerordentlich wenig Barrierematerial benötigt.

Eine weitere Methode zur Herstellung solcher Kunststoffbehälter ist die Herstellung aus Vorformlingen, die heute in der Regel spritzgegossen werden. Insbesondere bei PET-Behältern hat sich das Streckblasen durchgesetzt, bei dem der Vorformling nach dem Aufheizen zunächst mechanisch stark verstreckt wird und erst danach in die Form geblasen wird. Auch hier sind Mehrschichtvarianten zur Herstellung spezifischer Permeationseigenschaften bekannt. Schließlich ist es auch bekannt, Vorformlinge aus Rohrabschnitten herzustellen, die im Bereich ihres einen Endes verschlossen und im Bereich ihres anderen Endes mit einem geeigneten Mündungsstück versehen werden.

Die Herstellung eines mehrschichtigen Vorpresslings wird beispielsweise in den Schriften EP 1 105 274 A und EP 0 949 056 A beschrieben; gängige Barrierematerialien zeigt die EP 0 925 915 A.

Der Vorformling weist in der Regel eine wesentlich kleinere Gestalt auf als der herzustellende Behälter. Der Vorformling wird deshalb innerhalb der Blasstation mit Druckluft beaufschlagt, um ihn zum herzustellenden Behälter umzuformen. Bei diesem Aufblasvorgang erfolgt zusätzlich zur Verringerung der Wandstärke durch die Oberflächenvergrösserung eine Orientierung des Materials. Dies führt dazu, dass die dünne Wandung des Behälters eine sehr hohe Formstabilität aufweist, die den Behälter für eine Vielzahl von Verwendungen geeignet macht. Durch die Orientierung wird weiterhin die Permeation verringert.

Ein weiterer Weg, Kunststoffbehälter mit verbesserten Permeationseigenschaften auszustatten, ist die Oberflächenbehandlung- oder Beschichtung derartiger Behälter. Bekannt ist zum Beispiel die Fluorierung von Kraftstofftanks. Aber auch die Innen- oder Außenbeschichtung von Flaschen (z.B. mittels Lacken oder durch Vakuumbeschichtungsverfahren (CVD, PVD, PECVD) gehört zum Stand der Technik. Nachteilig an den in solcher Art verbesserten Kunststoffbehältern ist die weiterhin nicht die Qualität von Glas oder Metall erreichende Permeationsbarriere. Die Herstellung der Behälter erfordert durch die Vielzahl der benötigten spezifischen Schichten hohen apparativen und investiven Aufwand. Durch die Unverträglichkeit der verschiedenen Polymere in den Schichten ist das materielle Recycling kaum möglich. Auch eine Trennung der Schichten ist für das jeweils einzelne stoffliche Recycling ist schwierig.

Auf der anderen Seite wurden auch Verbesserungen von Glasbehältern, insbesondere bezüglich einer Gewichtsreduktion und verminderten Bruchanfälligkeit vorgenommen. Hierbei wird der zuvor hergestellte Glasbehälter in der Regel mit einer Beschichtung aus einem polymeren Werkstoff versehen. Nachteil dieser Behältersysteme ist das weiterhin hohe Gewicht und die weiterhin deutliche Bruchgefahr solcher Behälter.

Hieraus ergibt sich das Erfordernis, anorganisch-polymere Schichtverbunde mit einer guten Permeationsbarriere anzubieten. Dabei sollten eine gute Recyclingfähigkeit sowie gute Bruch- und Schlagbeständigkeit gewährleistet sein.

Eine Lösung dieses Problems wurde durch die Entwicklung eines Verfahrens zur Herstellung eines zumindest zweischichtigen anorganisch/polymeren Verbundmaterials angeboten, wobei ein überwiegend anorganisches Material, das eine Glasübergangstemperatur von nicht mehr als 500 °C aufweist, und ein polymeres Material bereitgestellt wird, wobei weiterhin das überwiegend anorganische Material und das polymere Material in einen viskosen Zustand gebracht, insbesondere aufgeschmolzen, werden und das überwiegend anorganische Material und das polymere Material in viskosem Zustand ausgeformt werden.

Eine Möglichkeit zur gleichzeitigen Ausformung der genannten Materialien ist deren Coextrusion aus der Schmelze zu einem Verbundmaterial (PCT/EP2008/055498, noch nicht veröffentlicht).

Eine Weiterentwicklung dieses Verfahrens ergibt sich daraus, dass das derart hergestellte Verbundmaterial zur Herstellung von Formkörpern, insbesondere von Hohlkörpern, weiter ausgeformt wird.

Ein bevorzugtes Verfahren hierfür ist das Mehrschicht-Blasformen. Dazu wird zunächst ein zumindest aus dem anorganischen Material und dem Polymer bestehendes schlauchähnliches Gebilde coextrudiert, welches dann in der Wärme oder nach Abkühlen und Wiederaufheizen innerhalb einer Blasform durch Gas- oder Flüssigkeitsdruck aufgebläht und an die formgebende Wandung gedrückt wird. Das Verfahren ist an sich bekannt und kann überraschend auch mit der anorganischen Schicht durchgeführt werden, ohne dass es zu einer Fehlstellenbildung in der anorganischen Schicht kommt. Nach dem Stand der Technik bekannte Verbesserungen des Verfahrens, wie z.B. die Wanddickenregelung des extrudierten Gebildes in Längs- oder Querrichtung, die örtlich unterschiedliche Temperierung des Formwerkzeugs oder zusätzliche Heiz- oder Abkühlvorrichtungen für den Vorformling, werden ebenfalls vorteilhaft eingesetzt.

Aufgabe der vorliegenden Erfindung ist es insbesondere, ein weiteres Verfahren zur Lösung des vorstehend genannten Problems, insbesondere also zur Herstellung von anorganisch-polymeren Verbundmaterialien anzubieten. Aufgabe der Erfindung ist es weiterhin, weitere Verfahren zur Herstellung von Formkörpern aus anorganischpolymeren Verbundmaterialien anzubieten.

Der Anspruch 1 betrifft demgemäß ein Verfahren zur Herstellung eines zumindest zweischichtigen anorganisch/polymeren Verbundmaterials, wobei ein überwiegend anorganisches Material, das eine Glasübergangstemperatur von nicht mehr als 500 °C aufweist, und ein polymeres Material bereitgestellt wird, das überwiegend anorganische Material und das polymere Material in einen viskosen Zustand gebracht werden und das überwiegend anorganische Material und das polymere Material durch ein anderes Formgebungsverfahren als die Coextrusion aus der Schmelze ausgeformt werden. Das Formgebungsverfahren gemäß der erfinderischen Lehre ist also nicht die Coextrusion aus der Schmelze.

Sehr bevorzugt wird als Formgebungsverfahren ein Spritzgießverfahren eingesetzt.

Für den Fachmann unvorhersehbar ist es gelungen, ein Verbundmaterial aus einem anorganischen - insbesondere glasigen - und einem polymeren Bereich in einem Werkzeug zu einem Formkörper zu formen, ohne dass Defekte in dem Verbund und thermische Schädigungen des Polymeren auftreten.

Unter einem überwiegend anorganischen Material wird insbesondere ein anorganisches Material verstanden, welches höchstens einen Anteil von 20 Vol-% an organischem Material enthält, vorzugsweise weniger als 10 Vol-%, besonders bevorzugt weniger als 1 Vol-%. Auch zu 100 % anorganische Materialien können hervorragend erfindungsgemäß eingesetzt werden. Je geringer der Anteil an organischem Material in dem anorganischen Material ist, desto bessere Barrierewerte können erzielt werden, insbesondere besonders niedrige Sauerstofftransmissionsraten OTR und besonders niedrige Wasserdampf-Transmissionsraten WVTR.

Zur sprachlichen Vereinfachung wird das 'überwiegend anorganische Material' im Rahmen dieser Schrift als "anorganisches Material" bezeichnet, wobei anorganische Materialen ohne organische Anteile als auch Materialien mit einem geringen Anteil an organischen Materialien gemäß der vorstehenden Ausführungen von diesem Begriff mit umfasst werden.

Amorphe anorganische (und amorphe überwiegend anorganische, s.o.) Materialien besitzen in der Regel keinen Schmelzpunkt, sondern einen mehr oder weniger breiten Transformationsbereich, der den Übergang zwischen dem festen (bzw. erstarrten) und dem flüssigen Zustand charakterisiert. Zur Charakterisierung der amorphen anorganischen Materialien werden im Rahmen dieser Schrift, sofern im Einzelnen nichts anderes angegeben ist, folgende Parameter herangezogen:
Der Transfomationspunkt ist die Temperatur, bei der das Glas während der Abkühlung aus dem plastischen Bereich in den starren Zustand übergeht. Als Glasübergangstemperatur amorpher anorganischer Materialien wird im Rahmen dieser Schrift der Transformationspunkt bezeichnet. Die Bestimmung kann per Dynamischer Differenzkalorimetrie DDK (englisch: DSC) gemäß DIN 53765: 1994-03 erfolgen; die Angaben zur Glasübergangstemperatur (zum Transformationspunkt) amorpher anorganischer Materialien im Rahmen dieser Schrift beziehen sich auf die extrapolierte Onsettemperatur T_{gO}^{E} entsprechend dieser Norm, vgl. Abschnitt 2.2.1, sofern im einzelnen nicht anders angegeben.

Als Erweichungspunkt (im engl.: softening point) wird in der Glastechnik die Temperatur bezeichnet, bei welcher das Glas eine Zähigkeit von 10^{7,6} dPa·s hat, d.h. sich durch sein Eigengewicht verformt. Die Angaben zur Erweichungstemperatur für amorphe anorganische Materialien, insbesondere für Gläser und glasartige Materialien, beziehen sich auf den Wert des Littleton-Erweichungspunktes gemäß ASTM C-338-73 (2003).

Für kristalline Systeme wird im Sinne der erfinderischen Lehre unter der Angabe "Glasübergangstemperatur" die Schmelztemperatur verstanden.

Die Angaben zur Glasübergangstemperatur für nicht anorganische und nicht überwiegend anorganische Materialien, insbesondere für organische und polymere Materialien, beziehen sich auf den Glasübergangstemperatur-Wert Tg nach DIN 53765:1994-03 (vgl. Abschnitt 2.2.1), sofern im Einzelfall nichts anderes angegeben ist.

Das überwiegend anorganische Material und das polymere Material liegen insbesondere bei Raumtemperatur in festem Zustand vor, um dass anorganisch/polymere Verbundmaterial und die hieraus hergestellten Formkörper bei dieser Temperatur für ihren jeweiligen Verwendungszweck anwenden zu können. Der Begriff "fest" im Sinne der erfinderischen Lehre dieser Schrift umfasst dabei insbesondere auch amorphe Festkörper, also insbesondere "erstarrte Festkörper" wie Gläser. Derartige Festkörper haben in der Regel keine regelmäßige Struktur. Umfasst werden auch polykristalline Festkörper und teilkristalline Festkörper.

In besonders bevorzugter Vorgehensweise werden das anorganische Material und das polymere Material aufgeschmolzen, um sie in einen viskosen Zustand zu bringen. Für das anorganische Material bedeutet dies, dass es auf eine Temperatur oberhalb des Erweichungspunktes gebracht wird; insbesondere auf eine Temperatur, bei der die Viskosität für den Formungsprozess hinreichend niedrig ist.

Entsprechendes gilt vorteilhaft auch für das polymere Material, auch dieses wird bevorzugt durch Erhitzen auf eine Temperatur oberhalb seiner Glasübergangstemperatur in einen viskosen, verarbeitbaren Zustand gebracht.

Werden das anorganische Material und das polymere Material gleichzeitig in einem Formungsprozess zu einem Verbundkörper verarbeitet werden, zeichnet sich eine vorteilhafte Verfahrensführung dadurch aus, dass das anorganische Material und das polymere Material bei einer im wesentlichen identischen Temperatur aufgeschmolzen wird, die insbesondere über der höheren der beiden Glasübergangstemperaturen bzw. Erweichungstemperaturen liegt.

Im erfindungsgemäßen Verfahren liegt das anorganische Material als kontinuierliche Phase vor oder wird zu dieser aufgeschmolzen. Damit unterscheidet sich das Verfahren von solchen, bei denen Pasten, z.B. Keramikpasten, mit einem geringen Anteil an Bindemitteln, oder Pulveraufschlämmungen (sogenannte Slurries) eingesetzt werden. In derartigen Verfahren liegt die anorganische Phase nicht kontinuierlich vor, und die Materialien werden in der Regel erst nach der Formgebung aufgeschmolzen oder gesintert.

Als Formgebungsverfahren für das zumindest zweischichtige Verbundmaterial wird vorteilhaft ein Spritzgießverfahren, insbesondere ein Mehrkomponenten-Spritzgießverfahren eingesetzt.

In einer vorteilhaften Vorgehensweise werden das überwiegend anorganische Material und das polymere Material in einem Cospritzgussverfahren (auch als "Coinjection" bezeichnet) ausgeformt. Dabei werden die zwei oder auch weitere Komponenten in der Regel sequentiell (insbesondere nacheinander) über eine Werkzeugdüse in ein Werkzeug eingespritzt und formen so einen Zwei- bzw. Mehrschichtaufbau. In einer besonderen Ausführungsform können die Komponenten auch über zwei oder mehrere Werkzeugdüsen eingespritzt werden.

Das Cospritzgießen ist dadurch vorteilhaft gekennzeichnet, dass es in einer einfachen Apparatur erfolgen kann, dass es wenig Ausschuss, wie Abfälle und anderes, ergibt und dass die dadurch hergestellten Formteile eine Struktur mit einer anorganischen Schicht aufweisen können, welche vollständig mit einer Polymerschicht bedeckt ist (anorganische Kernschicht und polymere Hüll- oder Hautschicht).

In einer weiteren vorteilhaften Vorgehensweise werden das überwiegend anorganische Material und das polymere Material im Überspritz-Verfahren (sogenanntes "Overmoulding") ausgeformt, wobei das Überspritz-Verfahren bevorzugt in einem sogenannten Tandemwerkzeug durchgeführt wird (sogenanntes "Tandem-Overmoulding" oder auch "TandemMould-Overmoulding").

Bei dem Überspritzverfahren wird zunächst ein Formkörper ("Vorspritzling") aus einem ersten Material spritzgegossen, welcher dann in einem zweiten Schritt - in einem weiteren Werkzeug oder innerhalb desselben Werkzeuges - mit zumindest einem weiteren Material zumindest teilweise umspritzt wird oder wobei dieses zumindest weitere Material angespritzt wird und sich die zumindest weiteren Materialien zu einem Verbund verbinden. Dabei kann sowohl zuerst das anorganische Material als auch zuerst das polymere Material verarbeitet werden. Auch können weitere Komponenten eingefügt werden.

Im Überspritzverfahren ist es auch möglich, die Herstellung des Vorspritzlings und das Überspritzen sowie weitere Verfahrenschritte an verschiedenen Positionen und/oder in unterschiedlichen Ebenen desselben Werkzeugs vorzusehen, wenn ein Transport des Spritzlings zwischen den Positionen bzw. den Werkzeugebenen ermöglicht wird.

Bei dem Tandemverfahren können die Verfahrensschritte des Mehrkomponenten-Spritzgießens wie Herstellen eines Kerns und das Überspritzen an unterschiedlichen Positionen innerhalb einer Ebene eines Etagenwerkzeugs ablaufen, wobei der Kern insbesondere drehbar zur Überspritz-Position transportiert werden kann. An weiteren, durch Drehung erreichbaren Positionen können weitere Überspritzschritte oder weitere Verfahrensschritte im Werkzeug vorgesehen sein. Bei diesem Verfahren lassen sich unterschiedliche Produktionsebenen des Etagenwerkzeugs zyklisch zeitversetzt öffnen. Während eine der Ebenen noch kühlt, kann die andere Ebene bereits entleert und neu befüllt werden.

Statt zur Herstellung eines Kern-Hülle-Verbundes kann das Überspritzverfahren auch genutzt werden, um verschiedene Materialien aneinander bzw. aufeinander zu spritzen und auf diese Art beispielsweise ein flächiges Verbundmaterial zu erhalten, oder um einen zwei- oder mehrschichtigen Spritzköper mit hohlem Innenraum als Rohling (Hohlraum - Kernhülle - ggf. weitere Schichten - Außenhülle) herzustellen, der insbesondere auf die nachfolgend dargestellte Weise weiter ausgeformt werden kann.

In bevorzugter Ausgestaltung des erfindungsgemäßen Verfahrens wird das anorganische Material zwischen zwei Bereichen, z.B. Schichten, eines polymeren Materials eingeschlossen. Eine Einbettung des anorganischen Materials zwischen zwei Bereichen eines polymeren Materials ist insbesondere vorteilhaft, da hierbei eventuell auftretende Eigenspannungen nach dem Abkühlen symmetrisch verteilt sind.

Sofern das anorganische Material zwischen zwei Bereichen eines polymeren Materials eingeschlossen wird, kann zudem vorgesehen werden, dass diese beiden Schichten aus unterschiedlichem polymerem Material hergestellt werden. Dadurch ist es möglich, die beiden Seiten des Verbundmaterials individuell für die jeweilige Verwendung anzupassen. Beispielsweise kann vorgesehen sein, dass eine Schicht Materialien mit einer besonders hohen Kratzfestigkeit enthält, während die andere Schicht speziell zur Verbesserung der chemischen Resistenz angepasst ist.

Neben einem zwei- oder dreischichtigen Aufbau können auch beliebige Schichtfolgen mit beliebiger Anzahl organischer und anorganischer Schichten verwendet werden, die auch nicht zwangsläufig immer im Wechsel aufeinander folgen müssen. Z.B. ist es oft sinnvoll, eine polymere Schicht mittels eines ebenfalls polymeren Haftvermittlers oder Klebers besser an die anorganische Schicht anzubinden.

Als anorganische Materialien können beispielsweise entsprechend niedrigschmelzende Gläser oder Metalllegierungen eingesetzt werden.

Bei dem anorganischen Material handelt es sich bevorzugt um ein Glas. Insbesondere können für die Erfindung "niedrig schmelzende" Gläser eingesetzt werden, d.h. Gläser mit niedrigem Transformationspunkt, insbesondere also mit einem Transformationspunkt von 500 °C oder weniger.

Besonders vorteilhaft ist es, wenn auch die Erweichungstemperatur, also die Temperatur, bei der ein Glas die Viskosität von 10^{7,6} dPa·s unterschreitet, unterhalb von 500 °C, besonders bevorzugt unterhalb von 400 °C liegt.

Glas bietet neben der guten Verarbeitbarkeit den Vorteil, dass es transparent ist. In Verbindung mit einem transparenten polymeren Material kann somit ein transparentes Verbundmaterial hergestellt werden, das die hohen Barrierewerte erfüllt. Als Glas eignet sich insbesondere Bleiglas, Phosphatglas oder Boratglas. Solche Gläser sind beispielsweise in der DE 765307 A, der US 5,013,360, der US 5,328,874, der US 5,534,469, der US 7,148,165 B2, der US 5,281,560, der US 5,122,484 sowie in Morena, R. "Phosphate glasses as alternatives to Pb-based sealing frits." (Journal of Non-Crystalline Solids 263 & 264. Elsevier Science. 2000) beschrieben, auf deren Offenbarungsgehalt bezüglich der einzusetzenden Gläser, insbesondere deren Zusammensetzung, explizit verwiesen wird. Als niedrigschmelzend bekannt sind aber auch Telluridgläser und nichtoxidische Gläser.

Ganz besonders bevorzugt eignen sich Gläser, bei denen Phosphat oder Borat durch Sulfat zumindest teilweise ersetzt ist und/oder bei denen Netzwerkwandler eingesetzt werden und/oder bei denen der Mischalkalieffekt ausgenutzt wird. Der Mischalkalieffekt beschreibt das Ersetzen von zum Beispiel Na₂O teilweise durch Li₂O oder K₂O und bewirkt wie auch die anderen Maßnahmen eine Erniedrigung der Glasübergangstemperatur. Auch Gläser aus dem System SnO/P₂O₅ oder ZnO/P₂O₅ sind als besonders niedrig schmelzend bevorzugt einsetzbar. Weiterhin besonders geeignet sind ternere Systeme wie z.B. ZnO/SnO/P₂O₅ oder MgO/SnO/P₂O₅.

Bevorzugt werden auch so genannte "kurze" Gläser eingesetzt, d.h. Gläser, die einen schmalen Schmelzbereich haben und bei denen die Viskosität oberhalb des Schmelzbereichs vergleichsweise stark abfällt. Durch diese Eigenschaft werden in der Regel bereits bei relativ niedrigen Temperaturen (Erweichungstemperatur beispielsweise etwa 50 °C oberhalb der Glasübergangstemperatur) Viskositäten erreicht, die niedrig genug sind, um eine schmelzeförmige Verarbeitung, insbesondere das Spritzgießen zu ermöglichen.

Da niedrigschmelzende Gläser oft gegenüber äußerer Medieneinwirkung empfindlich sind, werden weiterhin bevorzugt korrosionsstabile Gläser eingesetzt. Insbesondere eine hohe Wasserbeständigkeit ist von Vorteil. Solche Gläser mit niedriger Glastemperatur sind z.B. in P.A. Tick: Water durable glasses with ultra low melting temperatures, Physics and Chemistry of Glasses 25(1984) S. 149, offenbart.

Aus Arbeitsschutzgründen werden bevorzugt bleifreie Gläser eingesetzt. Solche sind z.B. in EP 1 248 816 B1 offenbart.

In einer bevorzugten Ausführung wird dem anorganischen Material zumindest ein Additiv zugesetzt, welches eine Fließverbesserung beziehungsweise eine Absenkung der Viskosität bei der Extrusion bewirkt. Das Additiv kann dem anorganischen Material dabei vor oder während der Schmelze zugesetzt werden. Ein geeignetes Additiv ist zum Beispiel Polyalkencarbonat, erhältlich unter der Bezeichnung QPAC von der Firma Empower Materials, Newark, DE, USA.

Bei dem eingesetzten polymeren Material handelt es sich bevorzugt um einen hochtemperaturbeständigen Thermoplast. Ein derartiger Thermoplast ermöglicht eine leichte Verarbeitung. Ferner ist ein derartiger Thermoplast äußerst inert, so dass keine chemischen Reaktionen des Thermoplasten berücksichtigt werden müssen. Bevorzugt werden Polymere aus der Gruppe bestehend aus Polyethylentherphthalat, Polyethylennaphthalat, Polybutylenterephthalat, Fluorpolyester, Polymethylpenten, Polynorbonen, substituierten Polyarlaten, Polyimid, Cyclo-Olefin-Copolymeren, Polysulfon, Polyethersulfon, Polyphenylsulfon, Polyphenylen, Polyphthalamid, Polyamidimid und Polycarbonat oder Copolymeren auf der Basis von Polymeren aus dieser Gruppe eingesetzt.

Als polymeres Material wird bevorzugt ein transparentes Material verwendet. Insbesondere in Kombination mit einem transparenten Glas kann so ein Verbundmaterial mit hoher Transparenz hergestellt werden. Die Transparenz sollte insbesondere im sichtbaren Spektralbereich (Wellenlänge von etwa 400 nm bis etwa 800 nm) gewährleistet sein. Hierzu sollte der Transmissionsgrad des Verbundmaterials mindestens 70 %, vorzugsweise mindestens 80 %, weiter vorzugsweise mindestens 85 % betragen. Um diese Transparenz zu erzielen sollten auch die einzelnen eingesetzten Materialien entsprechende Transmissionsgrade aufweisen.

Die Transparenz des polymeren Materials kann dem Material selbst inne wohnen, zum Beispiel bei amorphen Polymeren, oder durch besondere Verarbeitung des Polymers hergestellt werden, wie dies zum Beispiel durch die hohe Verstreckung von orientiertem Polypropylen bekannt ist, welches durch die Orientierung der Kristallite transparent wird. Ein weiteres Beispiel für eine über die Verarbeitungsparameter hergestellte Transparenz ist das plötzliche Abkühlen der Schmelze, so dass keine oder nur sehr kleine Kristallite wachsen können.

Bevorzugt wird zudem ein organisches Material verwendet, das in einem Temperaturbereich von 20 bis 200 °C eine Wärmeausdehnung von weniger als 25 x 10⁻⁶ K⁻¹ besitzt. Die geringe Wärmeausdehnung ist insbesondere vorteilhaft, um möglichst wenig Verspannungen zwischen dem anorganischen Material, insbesondere Glas, und dem polymeren Material zu erhalten. Die geringe Wärmeausdehnung kann bei einem transparenten Polymer zum Beispiel durch Füllung eines Polymers mit anorganischen Nanopartikeln erreicht werden, wobei die optische Transparenz erhalten bleibt. Durch diese Auswahl wird der Unterschied in der Wärmeausdehnung zum Glas verringert, was zu weniger Eigenspannungen im Verbundmaterial führt.

Ferner weist das anorganische Material bevorzugt eine Wärmeausdehnung von mehr als 12 x 10⁻⁶ K⁻¹ in einem Temperaturbereich von 20 °C bis 300 °C auf. Durch eine derartige Auswahl wird der Unterschied in der Wärmeausdehnung zum Polymer verringert, was zu weniger Eigenspannungen in dem Verbundmaterial führt. Solche Gläser mit einer Glastemperatur unter 500 °C sind zum Beispiel in Raab, D. et al: Inno Regio Südthüringen - Verbundprojekt: Entwicklung einer Schmelzkerntechnologie, Teilprojekt 2: Lösliche Gießkerne aus Glas: Schlussbericht, Förderkennzeichen BMBF 0312902B, beschrieben, deren Offenbarungsgehalt vorliegend durch Bezugnahme mit eingeschlossen wird.

Als polymeres Material wird weiter bevorzugt ein elastomeres oder elastomermodifiziertes Polymer eingesetzt. Hierdurch ist es möglich, gegebenenfalls vorhandene Eigenspannungen in dem polymeren Material elastisch auszugleichen. Hierzu eignen sich beispielsweise Silikone als Bestandteil des polymeren Materials.

In einer weiter bevorzugten Ausführung wird als polymeres Material eine Klebemasse eingesetzt. Dafür sind alle dem Fachmann bekannten extrudier- oder beschichtbaren Klebemassen verwendbar. Hierunter fallen sowohl Heißschmelzklebemassen, z. B. auf der Basis von Polyolefin(-Co)-Polymeren oder Polyamiden, reaktive Klebemassen, z.B. auf der Basis von Epoxiden oder Acrylaten und Haftklebemassen, z.B. auf der Basis von Acrylsäureestern, Synthesekautschuken (insbesondere Blockcopolymeren) oder Silikonen.

Mittels des erfindungsgemäßen Verfahrens lassen sich hervorragend anorganisch/polymere Verbundmaterialien herstellen. Durch eine Weiterentwicklung des erfindungsgemäßen Verfahrens lassen sich hieraus in hervorragender Weise dreidimensionale Formkörper, insbesondere Hohlkörper, wie Rohre, Behälter, Flaschen und dergleichen erzeugen. Die anorganisch/polymeren Verbundmaterialien lassen sich somit hervorragend als Rohlinge für nachfolgende Formgebungsverfahren einsetzen, insbesondere wenn sie dem vorangehenden Verfahren bereits in entsprechend günstiger weise vorgeformt wurden.

Vorteilhaft werden anorganisch/polymere Verbundmaterialien (bevorzugt die mittels des erfindungsgemäßen Verfahrens hergestellten Verbundmaterialien, aber beispielsweise auch die mittels des in der PCT/EP2008/055498 beschreibenen Verfahrens hergestellten Verbundmaterialien) als Rohlinge, sogenannte "Vorformlinge" oder - je nach Herstellverfahren - auch "Vorpresslinge", eingesetzt, indem sie zunächst bei ihrer Herstellung in eine Vorform gebracht werden (mehr oder weniger grob ausgeformt, beispielsweise Folie, Schlauch oder dergleichen). Dieser Rohling wird mittels eines weiteren Ausformverfahrens, insbesondere eines Blasverfahrens, in die letztendlich gewünschte Form gebracht.

Ein bevorzugtes Verfahren zum Ausformen ist das Mehrschicht-Blasformen. Dazu wird zunächst der Rohling hergestellt (anorganisch-polymeres Verbundmaterial), welcher dann in der Wärme oder nach Abkühlen und Wiederaufheizen innerhalb einer Blasform durch Gas- oder Flüssigkeitsdruck aufgebläht und an die formgebende Wandung gedrückt wird. Das Verfahren ist an sich bekannt und kann überraschend auch mit der anorganischen Schicht durchgeführt werden, ohne dass es zu einer Fehlstellenbildung in der anorganischen Schicht kommt. Nach dem Stand der Technik bekannte Verbesserungen, wie z.B. die Wanddickenregelung des extrudierten Gebildes in Längs- oder Querrichtung, die örtlich unterschiedliche Temperierung des Formwerkzeugs oder zusätzliche Heiz- oder Abkühlvorrichtungen für den Rohling, werden vorteilhaft auch für den erfindungsgemäßen Prozess eingesetzt.

Weiterhin vorteilhaft wird das Streckblasen eingesetzt. Dabei wird zunächst ein mehrschichtiger Rohling (bevorzugt "Vorpressling") erfindungsgemäß aus dem anorganischen Material und dem Polymer hergestellt, der nach dem Aufheizen zunächst mechanisch stark verstreckt wird und erst danach in die gewünschte Form geblasen wird, was wiederum durch Gas- oder Flüssigkeitsdruck erfolgen kann.

Eine erfindungsgemäß ebenfalls hervorragend zur Weiterverarbeitung der anorganisch-polymeres Verbundmaterialien einsetzbare Variante des Streckblasens ist das Spritzblasen, bei dem der Rohling nicht abgekühlt wird, sondern direkt in der Wärme dem Streckblasprozess zugeführt wird.

Bevorzugt ist die Dicke der anorganischen Schicht des zumindest zweischichtigen anorganisch/polymeren Verbundmaterials geringer als 100 µm, besonders bevorzugt geringer als 20 µm, ganz besonders bevorzugt geringer als 10 µm, insbesondere nach der Weiterverarbeitung zu dem Form- bzw. Hohlkörper. Dies ermöglicht eine verbesserte Recyclingfähigkeit des Hohlkörpers (bzw. Formköpers), da der Anteil der anorganischen Phase gering ist. Auch wird die Flexibilität und damit die Schlagfestigkeit des Behälters erhöht.

Die Dicke der Wandung des aus dem erfindungsgemäßen Verbundmaterial hegestellten Hohlkörpers (bzw. Formkörpers) beträgt bevorzugt weniger als 1 mm, besonders bevorzugt weniger als 200 µm, da hiermit ein besonders leichtgewichtiger Hohlkörper erreicht wird. Die Wanddicke kann über den Hohlkörper konstant sein oder je nach Einsatzfeld schwanken, also beispielsweise in Zonen erhöhter Beanspruchung verdickt sein. Gleiches gilt für das Verhältnis von polymerer Schicht zu anorganischer Schicht.

### Beispiele:

Anhand zweier Beispiel wird gezeigt, dass das erfindungsgemäße Verfahren hervorragend zur Herstellung anorganisch-polymerer Verbundmaterialien und daraus ausgeformter Formkörper geeignet ist, ohne sich durch die Wahl der Beispiele, der eingesetzten Materialien und der gewählten Verfahrensparameter unnötig in der erfinderischen Lehre einschränken zu wollen.

### Beispiel 1:

Es wurde ein Phosphatglas mit folgender Zusammensetzung (in Mol-%) von der Friedrich Farbglashütte GmbH, Kaufbeuren, bezogen:
4,9 % Li₂O; 9,4 % Na₂O; 7,1 % K₂O; 1,6 % CaO; 36,6 % ZnO; 20 % P₂O₅ und 20,4 % SO_{3.}

Die Körnung des Phosphatglases lag unterhalb 1,5 mm. Das Glas wies eine Glasübergangstemperatur von 270 °C auf. Das Glas wurde in einem Kolbenextruder bei einer Temperatur von 390 °C aufgeschmolzen

Als Polymer wurde ein Polyphenylsulfon des Typs Radel R-5900 der Firma Solvay verwendet. Es lag in Granulatform vor. Das Polymer wurde nach dem Trocknen entsprechend der Herstellerangaben in einem Einschneckenextruder bei einer Maximaltemperatur von 375 °C aufgeschmolzen.

Zunächst wurde ein Vorpressling mittels des Cospritzgussverfahrens hergestellt. Dieser besaß die für das Streckblasformen von PET-Flaschen übliche Geometrie. Zunächst wurde die Polymerschmelze in die Form gespritzt, dann die Glasschmelze. Die Wandtemperatur während des Einspritzens betrug 160 °C.

Es ergab sich ein dreischichtiger Vorpressling, bei dem die Glasschicht zwischen zwei Polymerschichten eingebettet war. Die Dicke der Glasschicht betrug etwa 500 µm

Der Pressling wurde abgekühlt und in einer bezüglich der Vorwärmung der Vorformlinge und der Blasformbeheizung modifizierten Streckblasmaschine der Fa. SIG-Corpoplast bei einer Temperatur von 290 °C zu Beginn des Streckvorgangs zu einer Flasche mit einem Volumen von ca. 500 ml verarbeitet. Dabei wurde der Vorformling um etwa den Faktor 3 in Längsrichtung verstreckt und um etwa den Faktor 4,5 in seinem Umfang aufgeblasen. Die Blasform war dabei auf eine Wandtemepratur von 270 °C beheizt.

Er wurde eine transparente Flasche hergestellt, wobei im mittleren Wandungsbereich die Schichtdicke des Polymers ca. 0,3 mm betrug, die des Glases ca. 35 µm.

Die Messung der Permeation von Sauerstoff wurde in Anlehnung an DIN 53380 mittels eines Permeationsmessgeräts der Fa. Extrasolution ermittelt, wobei mittels eines Adapters die gesamte Flasche vermessen wurde. Dabei wurde die Sauerstoffpermeation bei 23 °C und 0 % relativer Feuchte ermittelt. Die Messwerte blieben jeweils unterhalb der Nachweisgrenze des Messgeräts von 0,001 cm³/Flasche d bar. Somit konnten erfindungsgemäß defektfreie Behälter hergestellt werden.

### Beispiel 2:

Es wurde ein Phosphatglas mit folgender Zusammensetzung (in Mol-%) von der Friedrich Farbglashütte GmbH, Kaufbeuren, bezogen:
4,9 % Li₂O; 9,4 % Na₂O; 7,1 % K₂O; 1,6 % CaO; 36,6 % ZnO; 20 % P₂O₅ und 20,4 % SO_{3.}

Die Körnung des Phosphatglases lag unterhalb 1,5 mm. Das Glas wies eine Glasübergangstemperatur von 270 °C auf. Das Glas wurde in einem Kolbenextruder bei einer Temperatur von 390 °C aufgeschmolzen

Als Polymer wurde ein Polyphenylsulfon des Typs Radel R-5900 der Firma Solvay verwendet. Es lag in Granulatform vor. Das Polymer wurde nach dem Trocknen entsprechend der Herstellerangaben in einem Einschneckenextruder bei einer Maximaltemperatur von 375 °C aufgeschmolzen.

Zunächst wurde ein Vorpressling mittels des Overmouldingverfahrens hergestellt. Dieser besaß die für das Streckblasformen von PET-Flaschen übliche Geometrie. Zunächst wurde die Glasschmelze mit einer Temperatur von 390 °C in die etwa 160 °C heiße Form gespritzt und dann mit der auf 375 °C temperierten Polymerschmelze bei einer Formwandtemperatur von ebenfalls 160 °C umspritzt.

Es ergab sich ein zweischichtiger Vorpressling, bei dem die Glasschicht innen lag. Die Dicke der Glasschicht betrug etwa 120 µm

Der Pressling wurde abgekühlt und in einer modifizierten Streckblasmaschine der Fa. SIG-Corpoplast zu einer Flasche mit einem Volumen von ca. 500 ml verarbeitet. Dabei wurde der Vorformling um etwa den Faktor 3,5 in Längsrichtung verstreckt und um etwa den Faktor 5,2 in seinem Umfang aufgeblasen.

Er wurde eine transparente Flasche hergestellt, wobei im mittleren Wandungsbereich die Schichtdicke des Poymers ca. 0,3 mm betrug, die des Glases ca. 9 µm.

Die Messung der Permeation von Sauerstoff wurde in Anlehnung an DIN 53380 mittels eines Permeationsmessgeräts der Fa. Extrasolution ermittelt, wobei mittels eines Adapters die gesamte Flasche vermessen wurde. Dabei wurde die Sauerstoffpermeation bei 23 °C und 0% relativer Feuchte ermittelt. Es wurde eine Permeation von 0.002 cm³/Flasche d bar gemessen. Eine vergleichbare PET-Flasche mit einer Wandstärke von 0.3 mm zeigte eine Permeation von 0,04 cm³/Flasche d bar. Somit konnten erfindungsgemäß vorteilhafte Behälter hergestellt werden.

## Patentansprüche

1. Verfahren zur Herstellung eines zumindest zweischichtigen anorganisch/polymeren Verbundmaterials, wobei
ein überwiegend anorganisches Material bereitgestellt wird und
ein polymeres Material bereitgestellt wird,
**dadurch gekennzeichnet, dass**
das überwiegend anorganische Material eine Glasübergangstemperatur von nicht mehr als 500 °C aufweist,
das überwiegend anorganische Material und das polymere Material in einen viskosen Zustand gebracht werden und
das überwiegend anorganische Material und das polymere Material durch Spritzgießen zum Verbundmaterial ausgeformt werden.

2. Verfahren nach Anspruch 1, **dadurch gekennzeichnet, dass**
das überwiegend anorganische Material zur Verbringung in einen viskosen Zustand oberhalb der Glasübergangstemperatur aufgeschmolzen wird.

3. Verfahren nach einem der vorangehenden Ansprüche, **dadurch gekennzeichnet, dass** das überwiegend anorganische Material und das polymere Material im Cospritzgussverfahren ausgeformt werden.

4. Verfahren nach einem der vorangehenden Ansprüche, **dadurch gekennzeichnet, dass** das überwiegend anorganische Material und das polymere Material im Überspritz-Verfahren (sogenanntes "Overmoulding") ausgeformt werden.

5. Verfahren nach Anspruch 4, **dadurch gekennzeichnet, dass**
das Überspritz-Verfahren im Tandemwerkzeug durchgeführt wird (sogenanntes "Tandem-Overmouldung" oder auch "TandemMould-Overmoulding").

6. Verfahren nach einem der vorangehenden Ansprüche, **dadurch gekennzeichnet, dass** das Produkt aus einem der vorangehenden Ansprüche mittels eines Blasverfahrens weiterverarbeitet wird.

7. Verfahren nach einem der vorangehenden Ansprüche, **dadurch gekennzeichnet, dass** das Blasverfahren ein Mehrschicht-Blasformverfahren, ein Streckblasverfahren und/oder ein Spritzblasverfahren ist.

8. Verbundmaterial, erhältlich nach einem Verfahren nach einem der vorangehenden Ansprüche.

9. Verbundmaterial nach Anspruch 8, **dadurch gekennzeichnet, dass** es als Formkörper, insbesondere als Hohlkörper und/oder als Behälter, ausgeformt ist.
